# EUROPÄISCHE PATENTSCHRIFT

(11) **EP 3 331 122 B1**
(45) Veröffentlichungstag und Bekanntmachung des Hinweises auf die Patenterteilung: **28.04.2021**
(21) Anmeldenummer: 17020360.8
(22) Anmeldetag: 17.08.2017
(51) Int. Cl.: B60L 53/10, B60L 53/20, H02J 7/00, H02J 7/02, H02M 1/00

(54) **LADEVORRICHTUNG**
CHARGING DEVICE
DISPOSITIF DE CHARGE

(30) Priorität: 30.11.2016 DE 102016123066
(43) Veröffentlichungstag der Anmeldung: 06.06.2018
(73) Patentinhaber: Dr. Ing. h.c. F. Porsche AG, 70435 Stuttgart (DE)
(72) Erfinder: Götz, Stefan, 85659 Forstern (DE)

(56) Entgegenhaltungen:
- EP-A2- 2 388 884
- WO-A1-2016/045722
- WO-A2-2014/026840
- US-A1- 2015 155 791

## Beschreibung

Die vorliegende Erfindung betrifft eine Ladevorrichtung zum Aufladen elektrischer Energiespeicher für Kraftfahrzeuge nach dem Oberbegriff von Anspruch 1.

Die Energiespeicher von Elektrofahrzeugen werden üblicherweise an einer Ladesäuleaufgeladen, welche an ein öffentliches Stromnetz angeschlossen ist. In der Regel werden dazu Ladesysteme verwendet, welche ausschließlich für einen Niederspannungsanschluss, d. h. unterhalb 1500 V und beispielsweise für ein 400 V Dreiphasennetz ausgelegt sind.

Das Laden mehrerer Fahrzeuge in sog. Ladeparks benötigt jedoch höhere Leistungen, sodass auf das Mittelspannungsnetz zurückgegriffen werden muss. Die dazu notwendigen Netztransformatoren haben jedoch Größen- und Kostennachteile und sind zudem an die Netzfrequenz gebunden, wodurch hohe Verluste entstehen.

Im Stand der Technik sind daher Ladesysteme bekannt geworden, welche ohne einen Netztransformator auskommen. Diese sind dazu mit einer Serienschaltung von Leistungshalbleitern ausgestattet. Eine solche Verschaltung von Leistungshalbleitern erfordert allerdings einen sehr hohen Aufwand zur Symmetrierung, da sonst ein hohes Risiko einer ungleichmäßigen Aufteilung der Spannung auf die einzelnen Halbleiter und somit eine hohe Gefahr von Durchbrüchen einzelner Halbleiter besteht.

Aus der EP 2 388 884 A2 ist ferner eine Ladevorrichtung zum Laden mehrerer Fahrzeuge bekannt geworden, bei der eine Mehrzahl von Modulen direkt an ein Netz angeschlossen werden. Die Module umfassen jeweils einen Konverter, Inverter, Transformator und Gleichrichter. An ihrer Sekundärseite sind die Module mit Ladepunkten für einzelne Fahrzeuge verbunden. Dabei können nach Bedarf mehr oder weniger Module mit einem Ladepunkt verbunden werden.

Demgegenüber ist es die Aufgabe der vorliegenden Erfindung, eine verbesserte und vorzugsweise unaufwendige und wirtschaftliche Anbindung einer Ladevorrichtung für elektrische Energiespeicher von Kraftfahrzeugen an ein Mittelspannungsnetz zur Verfügung zu stellen.

Diese Aufgabe wird gelöst durch eine Ladevorrichtung mit den Merkmalen des Anspruchs 1. Bevorzugte Merkmale sind Gegenstand der Unteransprüche. Weitere Vorteile und Merkmale ergeben sich aus der allgemeinen Beschreibung der Erfindung und der Beschreibung der Ausführungsbeispiele.

Die erfindungsgemäße Ladevorrichtung dient zum Aufladen elektrischer Energiespeicher für Kraftfahrzeuge und vorzugsweise Elektrofahrzeuge. Die Ladevorrichtung umfasst wenigstens eine Umwandlungseinrichtung zur Umsetzung einer aus einem Mittelspannungsnetz bezogenen Leistung bzw. Spannung und Strom in eine für den Ladevorgang des Energiespeichers geeignete Leistung bzw. Spannung und Strom. Dabei umfasst die Umwandlungseinrichtung wenigstens eine mit wenigstens einer Phase des Mittelspannungsnetzes verbundene Phaseneinheit. Die Phaseneinheit umfasst wenigstens zwei Stränge, nämlich wenigstens einen Strang für einen positiven Anteil der Phase und wenigstens einen Strang für einen negativen Anteil der Phase. Den Strängen ist jeweils wenigstens ein Modul zugeordnet. Ein Modul umfasst dabei wenigstens eine Eingangseinheit und wenigstens eine Invertereinheit und wenigstens eine Transformatoreinheit und wenigstens eine der Transformatoreinheit zugeordnete Gleichrichtereinheit und wenigstens eine Ausgangseinheit. Dabei umfasst die Ladevorrichtung eine Mehrzahl von Ladepunkten, an denen jeweils wenigstens ein Energiespeicher für Kraftfahrzeuge koppelbar ist. Die Ladepunkte sind jeweils durch mehrere Module und/oder mehrere Phaseneinheiten mit der für einen Ladevorgang des Energiespeichers benötigten Leistung versorgbar.

Die erfindungsgemäße Ladevorrichtung bietet viele Vorteile. Ein erheblicher. Vorteil ist, dass durch den modularen Aufbau der Umwandlungseinrichtung die für den Ladevorgang benötigte Leistung wirtschaftlich und verlustarm direkt aus dem Mittelspannungsnetz bezogen werden kann. Dadurch kann auf kostenintensive und verlustreiche sowie störanfällige Gleichrichterkaskaden verzichtet werden. Die modulare Umwandlungseinrichtung bietet zudem eine hohe Leistungsdichte und eine kleine Baugröße sowie geringe Materialkosten. Auch die Anpassung an gewünschte Eingangs- und Ausgangsleistungen ist unkompliziert umsetzbar.

Insbesondere umfasst das Modul wenigstens eine Verschaltung. Insbesondere ist der Eingangseinheit die Invertereinheit nachgeschaltet. Der Invertereinheit sind die Transformatoreinheit mit der Gleichrichtereinheit sowie die Ausgangseinheit nachgeschaltet. An der Ausgangseinheit ist insbesondere die für den Ladevorgang benötigte Leistung bzw. die Ladespannung und der Ladestrom abgreifbar. Die Ausgangseinheit umfasst wenigstens einen positiven und/oder wenigstens einen negativen Ausgang.

Insbesondere liegt die Eingangseinheit auf einer Primärseite des Moduls. Insbesondere liegt die Ausgangseinheit auf einer Sekundärseite des Moduls. Unter einer Primärseite bzw. Sekundärseite eines Moduls wird im Rahmen der vorliegenden Erfindung derjenige Teil des Moduls verstanden, welcher der Primärseite bzw. Sekundärseite der Transformatoreinheit zugeordnet ist.

Insbesondere umfasst eine Phaseneinheit eine Mehrzahl von Modulen. Beispielsweise wenigstens fünf oder zehn oder 15 oder mehr Module.

Vorzugsweise sind den Strängen jeweils wenigstens zwei Module zugeordnet. Besonders bevorzugt ist den Strängen jeweils eine Mehrzahl von Modulen zugeordnet. Beispielsweise kann ein Strang drei oder vier oder auch fünf oder mehr Module umfassen. Insbesondere sind jedem Strang wenigstens fünf Module zugeordnet. Möglich ist auch, dass jedem Strang wenigstens zehn oder auch 20 oder mehr Module zugeordnet sind. Dabei können die Stränge eine gleiche Anzahl oder auch eine unterschiedliche Anzahl an Modulen aufweisen. Insbesondere ist die Anzahl der Module an die vom Mittelspannungsnetz bereitgestellte Spannung angepasst und/oder an die Anzahl der Ladepunkte angepasst.

Der modularisierte Aufbau bietet dabei die Möglichkeit, sehr unaufwendig die Anzahl der Module anzupassen. Beispielsweise wird die Anzahl der Module an eine Größe eines Ladeparks angepasst.

Die Module der Phaseneinheit sind vorzugsweise über ihre Eingangseinheiten seriell verschaltet. Insbesondere sind die Module auf ihrer Primärseite seriell miteinander verschaltet. Insbesondere sind die Module eines Strangs und bevorzugt auch verschiedener Stränge einer Phaseneinheit seriell miteinander verschaltet.

In allen Ausgestaltungen ist es bevorzugt, dass die Phaseneinheit wenigstens eine galvanische Trennung zwischen dem Mittelspannungsnetz und einem zu ladenden Energiespeicher umfasst. Vorzugsweise wird wenigstens eine galvanische Trennung durch wenigstens eine Transformatoreinheit zur Verfügung gestellt. Insbesondere stellt jedes Modul mit seiner Transformatoreinheit eine galvanische Trennung bereit. Es kann wenigstens eine außerhalb der Transformatoreinrichtung angeordnete galvanische Trennung vorgesehen sein. Es kann auch eine andere geeignete Schutztrennung als eine galvanische Trennung vorgesehen sein.

Insbesondere ist die Primärseite von der Sekundärseite des Moduls galvanisch getrennt. Das bietet erhebliche Vorteile, da die Sekundärseite bzw. die Ausgangseinheiten der Module mit hohen Freiheitsgraden verschaltet werden können. Beispielsweise können die Ausgangseinheiten der Module beliebig fix in Serie und/oder parallel oder auch umkonfigurierbar verschaltet werden, um einen oder mehrere Ladepunkte zu speisen.

Die Umwandlungseinrichtung umfasst vorzugsweise wenigstens zwei und besonders bevorzugt wenigstens drei Phaseneinheiten. Die Umwandlungseinrichtung kann auch eine Mehrzahl von Phaseneinheiten umfassen. Insbesondere ist für die vom Mittelspannungsnetz bereitgestellten Phasen jeweils wenigstens eine Phaseneinheit vorgesehen. Es kann auch nur ein Teil der verfügbaren Phasen des Mittelspannungsnetzes an die Ladevorrichtung angebunden sein. Möglich ist auch, dass einer Phase des Mittelspannungsnetzes zwei oder mehr Phaseneinheiten zugeordnet sind. Der modulare Aufbau hat hier den Vorteil, dass die Ladevorrichtung an die Größe eines Ladeparks sehr unkompliziert und kostengünstig durch Hinzufügen oder Weglassen von Phaseneinheiten angepasst werden kann.

Die Phaseneinheiten sind insbesondere über ihre Stränge miteinander verschaltet und vorzugsweise parallel verschaltet. Insbesondere sind die Stränge der Phaseneinheiten zu einem gemeinsamen negativen Strang und zu einem gemeinsamen positiven Strang parallel verschaltet. Die Phaseneinheiten können auch separat verschaltet sein. Möglich ist auch, dass eine serielle Verschaltung der Phaseneinheiten vorgesehen ist.

Besonders bevorzugt sind diejenigen Phaseneinheiten miteinander verschaltet und vorzugsweise parallel verschaltet, welche durch verschiedene Phasen des Mittelspannungsnetzes gespeist werden. Beispielsweise sind drei Phaseneinheiten zu einem Dreiphasenmittelspannungsanschluss verschaltet. Dabei kann eine phasenversetzte Anordnung vorgesehen sein, beispielsweise um 120°.

Insbesondere sind die Eingangseinheiten des positiven und des negativen Strangs dazu geeignet und ausgebildet, nur den positiven bzw. nur den negativen Anteil der Phase passieren zu lassen. Dazu weisen die Eingangseinheiten insbesondere jeweils wenigstens eine entsprechend ausgerichtete Diodeneinrichtung oder eine Gleichrichtereinrichtung auf. Eine Gleichrichtereinrichtung umfasst wenigstens einen Gleichrichter oder wenigstens eine Diodeneinrichtung. Eine Gleichrichtereinrichtung kann auch wenigstens einen Kondensator umfassen, beispielsweise einen Zwischenkreiskondensator. Insbesondere ist durch die Eingangseinheiten ein Gleichstrom und insbesondere ein pulsierender Gleichstrom erzeugbar. Der Gleichstrom wird insbesondere der Invertereinheit zugeführt.

Es ist möglich, dass die Eingangseinheit wenigstens eine passive Gleichrichtereinrichtung umfasst. Das ermöglicht eine besonders kostengünstige Umsetzung der Ladevorrichtung.

Möglich ist auch, dass die Eingangseinheit wenigstens eine aktive Gleichrichtereinrichtung umfasst. Die aktive Gleichrichtereinrichtung weist vorzugsweise wenigstens eine Phasenanschnittsteuerung und/oder wenigstens einen Bipolartransistor mit isolierter Gate-Elektrode (IGBT) und/oder wenigstens einen Feldeffekttransistor auf. Dadurch ist eine besonders gezielte Anpassung an die Netzbedingungen des Mittelspannungsnetzes möglich.

In einer vorteilhaften Ausgestaltung sind die Module wenigstens teilweise über wenigstens eine Steuereinrichtung miteinander wirkverbunden. Durch die Steuereinrichtung sind insbesondere die Eingangseinheiten und/oder die Invertereinheiten der Module durch die Steuereinrichtung ansteuerbar. So kann eine besonders gleichmäßige Leistungsentnahme und somit eine einfache Symmetrierung der Halbleiter erzielt werden. Möglich ist auch, dass wenigstens ein Teil der Module verschiedener Phaseneinheiten über die Steuereinrichtung wirkverbunden ist. Möglich ist auch, dass die Module von verschiedenen Strängen und/oder desselben Strangs über die Steuereinrichtung miteinander wirkverbunden sind.

Möglich ist auch, dass die Eingangseinheiten und/oder die Invertereinheiten selbstregelnd ausgebildet sind.

Die Invertereinheit umfasst insbesondere wenigstens eine

Dual-Active-Bridge-Einrichtung mit oder ohne Softswitching. Die Invertereinheit kann auch wenigstens einen Neutral-Point-Clamped- (NPC-) Fünflevelinverter mit oder ohne Softswitching umfassen. Solche Ausgestaltungen ermöglichen eine besonders gute Ansteuerung der Invertereinheiten.

Besonders bevorzugt sind die Module wenigstens teilweise über ihre Ausgangseinheiten parallel und/oder seriell verschaltet. So ist eine parallele bzw. serielle oder gemischte Verschaltung der Module auf ihrer Sekundärseite möglich. Beispielsweise können die Module einer Phaseneinheit und/oder die Module unterschiedlicher Phaseneinheiten wenigstens teilweise über ihre Ausgangseinheiten parallel und/oder seriell verschaltet sein. Möglich ist auch, dass die Module desselben Strangs oder unterschiedlicher Stränge über ihre Ausgangseinheiten parallel und/oder seriell verschaltet sind. Durch solche Verschaltungen können besonders gut mehrere Ladepunkte gleichzeitig gespeist werden. Möglich ist aber auch, dass die Module über ihre Ausgangseinheiten wenigstens teilweise separat verschaltet sind.

Es ist möglich, dass die Ausgangseinheiten steuerbar verschaltet sind, sodass in Abhängigkeit einer Kenngröße zwischen einer parallelen und einer seriellen und einer gemischten Verschaltung gewechselt werden kann. Insbesondere ist dazu wenigstens eine Steuereinrichtung vorgesehen, welche mit den Modulen bzw. den Ausgangseinheiten wirkverbunden ist. Beispielsweise beschreibt die Kenngröße die Ladezustände der angebundenen Energiespeicher und/oder die Auslastung der Ladevorrichtung. So kann die Verschaltung besonders zügig und unaufwendig unkonfiguriert werden, um auf die Auslastung eines Ladeparks zu reagieren.

In einer bevorzugten Ausgestaltung umfasst die Ladevorrichtung eine Mehrzahl von Ladepunkten, an denen jeweils wenigstens ein Energiespeicher für Kraftfahrzeuge koppelbar ist. Vorzugsweise ist jeweils ein Ladepunkt durch mehrere Module und/oder mehrere Phaseneinheiten mit der für einen Ladevorgang des Energiespeichers benötigten Leistung versorgbar. Ein Ladepunkt kann aber auch durch ein einzelnes Modul versorgbar sein. Insbesondere ist jedes Modul dazu geeignet und ausgebildet, einzeln und/oder in Kombination mit anderen Modulen wenigstens einen Ladepunkt zu versorgen. Es ist möglich, dass für jeden Ladepunkt wenigstens eine Ausgangsschütze vorgesehen ist.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine erfindungsgemäße Ladevorrichtung in einer rein schematischen Darstellung;
- Figur 2: eine rein schematische Darstellung einer Phaseneinheit;
- Figur 3: eine andere Ausgestaltung einer Phaseneinheit in einer rein schematischen Darstellung;
- Figur 4: eine weitere Ausgestaltung einer Phaseneinheit in einer rein schematischen Darstellung;
- Fig. 5-9: jeweils einen Ausschnitt einer rein schematischen Phaseneinheit mit unterschiedlich ausgestalteten Verschaltungen;
- Figur 10: eine rein schematische Darstellung einer Invertereinheit;
- Figur 11: eine rein schematische Darstellung einer anderen Invertereinheit; und
- Figur 12: eine Verschaltung mehrerer Phaseneinheiten.

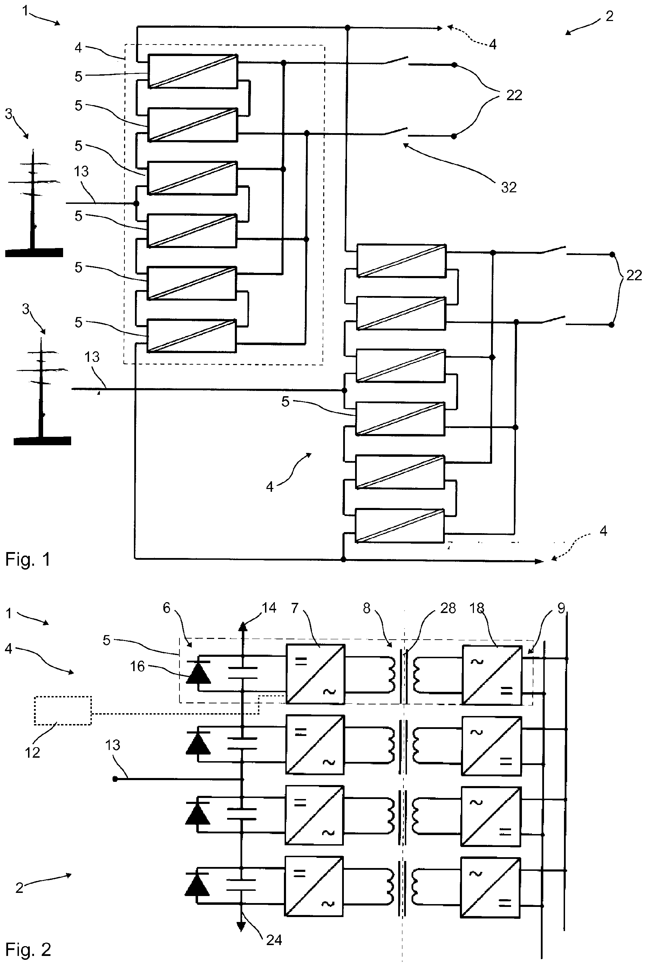

Die Figur 1 zeigt eine erfindungsgemäße Ladevorrichtung 1 zum Aufladen elektrischer Energiespeicher für Kraftfahrzeuge mit einer Umwandlungseinrichtung 2. Die Umwandlungseinrichtung 2 dient zur Umwandlung einer aus einem Mittelspannungsnetz 3 bezogenen Leistung in eine für den Ladevorgang der Energiespeicher geeignete Leistung. Die Spannung des Mittelspannungsnetzes 3 beträgt beispielsweise 10 kV, 20 kV oder auch 30 kV. Möglich sind auch höhere oder geringere Spannungen.

Die Umwandlungseinrichtung 2 umfasst hier zwei Phaseneinheiten 4. Jede Phaseneinheit 4 ist dabei mit einer Phase 13 des Mittelspannungsnetzes 3 gekoppelt. Alternativ können die Phaseneinheiten 4 auch mit einer oder mehreren weiteren Phaseneinheiten 4 verschaltet sein. Diese Phaseneinheiten 4 können dann über eine eigene Phase 13 an das Mittelspannungsnetz 3 angebunden sein oder mit den beiden hier gezeigten Phasen 13 verbunden werden.

Die beiden Phaseneinheiten 4 sind hier gleichartig aufgebaut und umfassen jeweils sechs Module 5. Um die Module 5 einer Phaseneinheit 4 besser zuordnen zu können, ist hier eine Phaseneinheit 4 mit einer gestrichelten Linie umrandet. Bevorzugt sind Phaseneinheiten 4 mit einer größeren Anzahl von Modulen 5. Beispielsweise umfasst eine Phaseneinheit 4 bei einer Spannung von 20 kV des Mittelspannungsnetzes wenigstens 15-20 Module 5. Die Module 5 werden mit Bezug zu der Figur 2 näher beschrieben.

Die beiden Phaseneinheiten 4 stellen hier zwei Ladepunkte 22 zur Verfügung. An den Ladepunkten 22 kann beispielsweise jeweils ein Elektrofahrzeug bzw. ein elektrischer Energiespeicher angekoppelt und aufgeladen werden. Die Zuleitungen zu den Ladepunkten 22 sind hier jeweils mit einer Ausgangsschütze 32 gesichert.

In der Figur 2 ist eine einzelne Phaseneinheit 4 der Umwandlungseinrichtung 2 näher dargestellt. Die Phaseneinheit 4 umfasst hier einen positiven Strang 14 und einen negativen Strang 24. An jedem Strang 14, 24 sind hier zwei Module 5 angebunden. Bevorzugt sind aber wenigstens 5 oder 10 oder mehr Module pro Strang 14, 24 vorgesehen. Um die einem Modul 5 zugehörigen Komponenten besser zu verdeutlichen, ist hier das obere Modul 5 mit einer gestrichelten Linie umrandet. Die Module 5 sind hier an ihrer Primärseite seriell verschaltet.

Ein Modul 5 umfasst hier eine Eingangseinheit 6. Die Eingangseinheit 6 ist mit einer Gleichrichtereinrichtung 16 und einem Zwischenkreiskondensator ausgestattet. So wird der positive Anteil der Phase 13 auf den positiven Strang 14 und der negative Anteil auf dem negativen Strang 24 aufgeteilt. Durch die Eingangseinheit 6 steht nun für jedes Modul 5 ein Gleichstrom, der pulsierend ausgebildet sein kann, zur Verfügung. Die Gleichrichtereinrichtung 16 ist z. B. passiv ausgebildet.

Der Eingangseinheit 6 ist hier eine Invertereinheit 7 zur Frequenzerhöhung nachgeschaltet. Beispielsweise wird so die Frequenz des Eingangsstroms um Faktor 100 oder 1000 oder mehr angehoben. Zum Beispiel weist der Eingangsstrom eine Frequenz von 50 Hz auf, welche durch die Invertereinheit 7 auf 50 kHz angehoben wird. Es können auch Frequenzerhöhungen auf 200 kHz oder 400 kHz oder mehr erfolgen. Die Frequenzerhöhung ermöglicht eine höhere Leistungsdichte und eine deutlich kleinere Baugröße und somit auch geringere Materialkosten der entsprechenden Bauteile.

Der Invertereinheit 7 ist eine Transformatoreinheit 8 nachgeschaltet, um die von der Invertereinheit 7 bereitgestellte Wechselspannung auf eine geringere Spannungshöhe umzusetzen. Aufgrund der hier vorliegenden hohen Frequenzen kann die Transformatoreinheit 8 auch als ein Überträger.

Die Transformatoreinheit 8 ermöglicht zudem, dass eine galvanische Trennung 28 zu den nachgeschalteten Bereichen des Moduls 5 erreicht wird. Die Primärseite ist so von der Sekundärseite galvanisch getrennt.

Die galvanische Trennung 28 ist hier für jedes Modul 5 der Phaseneinheit 4 vorgesehen, sodass die Module 5 an ihrer Sekundärseite unabhängig von der Primärseite verschaltet werden können. So wird eine galvanische Trennung 28 der Ladepunkte 22 untereinander und vom Netz 3 sowie von der Erde erreicht.

Der Sekundärseite der Transformatoreinheit 8 ist hier eine Gleichrichtereinheit 18 nachgeschaltet. So wird die Wechselspannung in die für den Ladevorgang benötigte Gleichspannung umgesetzt.

Der Gleichrichtereinheit 18 ist eine Ausgangseinheit 9 nachgeschaltet, welche in einer besonders einfachen Variante aus einem positiven und einem negativen Ausgang besteht.

In einer alternativen Ausgestaltung kann die Invertereinheit 7 durch eine Steuereinrichtung 12 steuerbar sein. Beispielsweise kann so die Amplitude bzw. das An/Aus-Verhältnis eingestellt werden, um die Leistungsentnahme zu beeinflussen und z. B. besonders gleichmäßig zu gestalten. Dazu kann die Ist-Spannung bzw. Ist-Leistung erfasst und zur Einstellung einer Zielspannung bzw. Zielleistung herangezogen werden. Die Invertereinheit 7 kann aber auch selbstregelnd ausgestaltet sein.

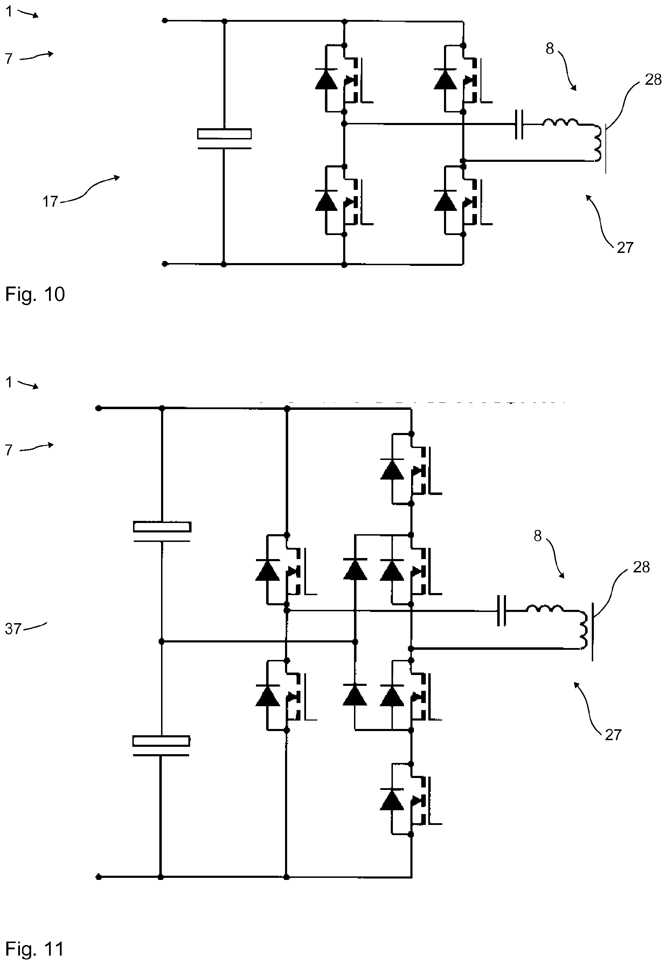

Besonders vorteilhafte Ausgestaltungen von steuerbaren Invertereinheiten 7 sind in den Figuren 10 und 11 gezeigt.

Die Figur 10 zeigt eine Invertereinheit 7, welche hier mit einer Dual-Active-Bridge-Einrichtung 17 ausgestaltet ist. Zudem ist die Invertereinheit 7 hier mit einem Softswitching 27 ausgestattet. Das hat den Vorteil, dass die Energie im Wesentlichen nur an Resonanzpunkten durchgelassen wird und eine besonders verlustarme Übertragung erreicht wird. In einer alternativen Ausgestaltung kann die Invertereinheit 7 mit einer Dual-Active-Bridge-Einrichtung 17 ohne Softswitching 27 vorgesehen sein.

Die Figur 11 zeigt eine Invertereinheit 7 mit einem Neutral-Point-Clamped- (NPC-) Fünflevelinverter (37). Zudem kann die Invertereinheit 7 hier mit einem Softswitching 27 ausgestattet sein. Eine solche Invertereinheit 7 kann besonders gezielt und verlustarm angesteuert werden.

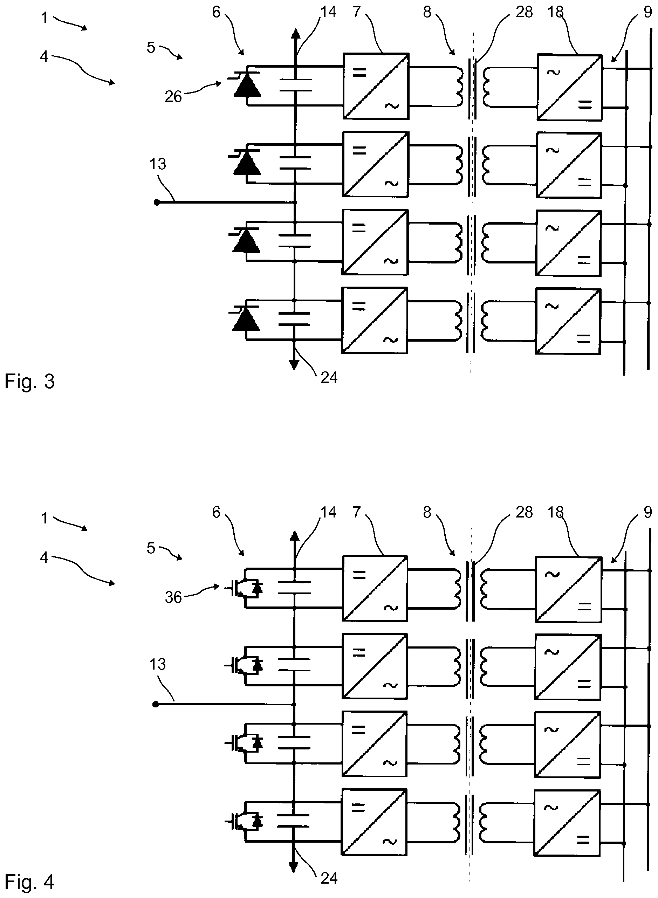

Die Figur 3 zeigt eine alternative Ausgestaltung der Phaseneinheit 4. Dabei sind die Eingangseinheiten 6 der jeweiligen Module 5 hier mit einer

Phasenanschnittsteuerung 26 ausgebildet. Dadurch kann besonders gezielt ein pulsierender Gleichstrom bereitgestellt werden.

In der Figur 4 ist eine Weiterbildung der Phaseneinheit 4 gezeigt, bei der die Eingangseinheiten 6 mit jeweils einem Bipolartransistor mit isolierter Gate-Elektrode (IGBT) 36 ausgestattet sind. In einer hier nicht gezeigten Variante können die Eingangseinheiten 6 auch mit entsprechenden Feldeffekttransistoren ausgestattet sein, Auch das bietet eine vorteilhafte Möglichkeit zur aktiven Gleichrichtung auf der Primärseite der Module 5.

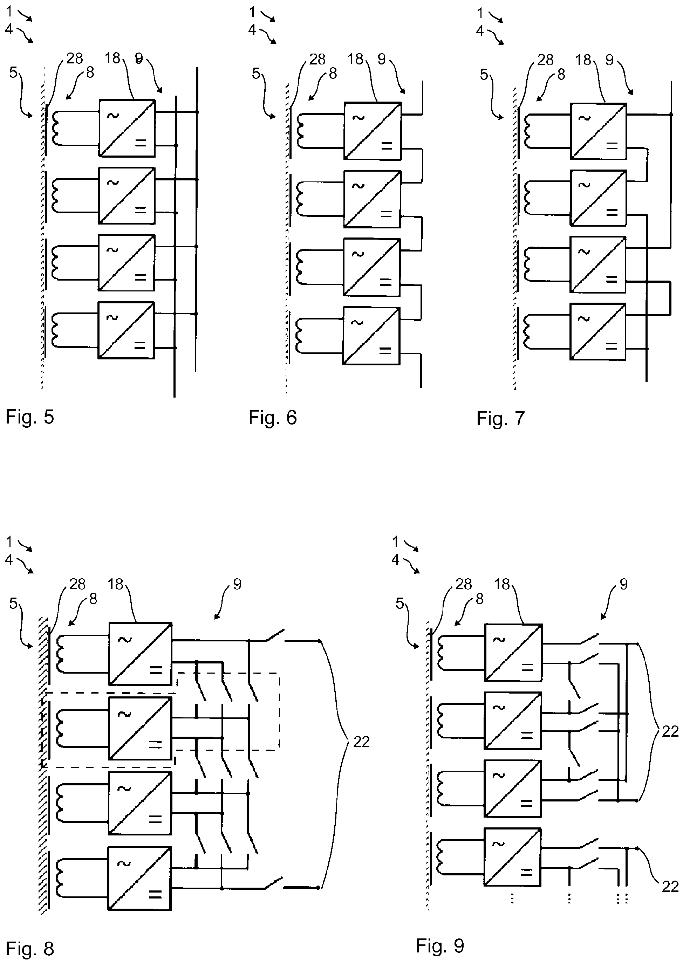

Die Figuren 5-9 zeigen jeweils nur die auf der Sekundärseite der Module 5 liegenden Komponenten.

Dabei zeigt die Figur 5 eine Phaseneinheit 4, bei der die Module 5 über die Ausgangseinheiten 9 auf ihrer Sekundärseite parallel verschaltet sind.

In der Figur 6 ist eine Phaseneinheit 4 gezeigt, bei der die Module 5 über die Ausgangseinheiten 9 auf ihrer Sekundärseite seriell verschaltet sind.

In der Figur 7 ist eine gemischte Verschaltung der Module 5 einer Phaseneinheit 4 gezeigt. Dabei sind die Ausgangseinheiten 9 sowohl seriell als auch parallel miteinander verschaltet.

Die Figur 8 zeigt eine Phaseneinheit 4 mit einer steuerbaren Verschaltung der Ausgangseinheiten 9. Dabei ist der reproduzierbare Block der Verschaltung hier durch eine gestrichelte Linie umrandet. Die gezeigte Verschaltung ermöglicht eine rekonstruierbare Variante für eine beliebige Anzahl von Modulen 5 mit gemischter seriell/paralleler Verschaltung.

Die Ansteuerung der Verschaltung geschieht beispielsweise über eine Steuereinrichtung 12 in Abhängigkeit einer Kenngröße. So kann beispielsweise ein Ladezustand der angebundenen Energiespeicher oder die Auslastung der Ladevorrichtung 1 als Kenngröße berücksichtigt werden. Beispielsweise ist die Steuereinrichtung 12 dazu mit den Modulen bzw. Ausgangseinheiten 9 wirkverbunden.

In der hier gezeigten Ausgestaltung stellt die Phaseneinheit 4 einen Ladepunkt 22 zur Verfügung, zu dessen Versorgung die Module 5 beliebig seriell und/oder parallel miteinander verschaltet werden können. Mehrere Ladepunkte 22 können beispielsweise durch mehrere solcher Phaseneinheiten 4 bedient werden.

Die steuerbare Verschaltung auf der Sekundärseite der Module 5 ermöglicht eine gezielte und unaufwendige Anpassung der Umwandlungseinrichtung 2 an die benötigte Leistung und beispielsweise an die Anzahl der aufzuladenden Elektrofahrzeuge in einem Ladepark.

In der Figur 9 ist eine andere steuerbare Verschaltung der Ausgangseinheiten 9 gezeigt. Diese Verschaltung ermöglicht einen Wechsel zwischen einer parallelen und einer seriellen Verschaltung. So werden die Ladepunkte 22 entweder durch parallel verschaltete Module 5 oder durch seriell verschaltete Module 5 versorgt.

Solche umkonfigurierbaren bzw. steuerbaren Verschaltungen können besonders vorteilhaft in Ladeparks eingesetzt werden, in denen Energiespeicher verschiedener Spannungsklassen aufgeladen werden sollen. So gibt es beispielsweise Elektrofahrzeuge, deren Energiespeicher einen hohen Ladestrom bei einer geringen Spannung benötigen. Andererseits gibt es Elektrofahrzeuge, deren Energiespeicher eher geringere Ladeströme mit höheren Spannungen benötigen. Durch die umkonfigurierbare Verschaltung können diese unterschiedlichen Spannungsklassen problemlos mit einer Ladevorrichtung 1 bedient werden können.

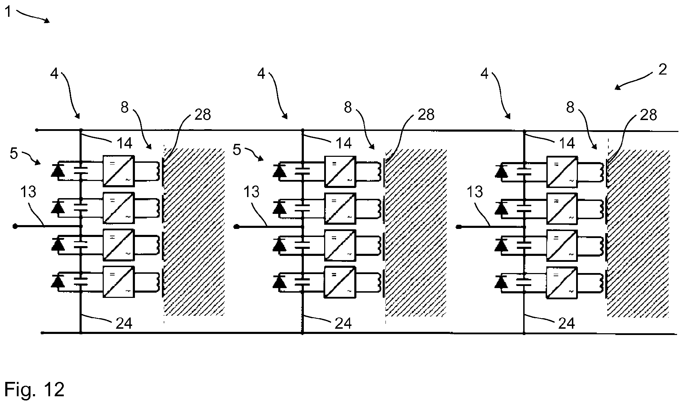

Die Figur 12 zeigt eine Ausgestaltung der Umwandlungseinrichtung 2 mit insgesamt drei Phaseneinheiten 4 zu einem Dreiphasenmittelspannungsanschluss. Die Phaseneinheiten werden dabei durch jeweils eine Phase 13 eines Mittelspannungsnetzes 3 versorgt. Dabei ist zur besseren Übersichtlichkeit jeweils nur die Primärseite der einzelnen Module 5 gezeigt. Die Phaseneinheiten 4 sind hier über ihre Stränge 14, 24 parallel miteinander verschaltet.

Auf der hier nicht gezeigten Sekundärseite können auch Module 5 unterschiedlicher Phasen 13 beliebig seriell und/oder.parallel verschaltet werden. Die Module 5 können aufgrund der galvanischen Trennung 28 mit ihrer Sekundärseite beliebig auf die Ladepunkte 22 der Ladevorrichtung 1 verteilt werden.

Die hier vorgestellte Erfindung bietet eine direkte Kontaktierung eines Mittelspannungsnetzes 3 ohne Verwendung eines kostenintensiven Netztransformators. Zudem kann auf eine störungsanfällige Serienschaltung von Leistungshalbleitern verzichtet werden.

Die Erfindung präsentiert eine modulare Lösung, die eine automatische Symmetrierung der Halbleiter auf der Mittelspannungsseite bietet. Die Symmetrierung wird insbesondere durch die gleichmäßige Leistungsentnahme aus jedem Modul 5 gesteuert. Die Schaltung zerteilt den sonst üblichen Mittelspannungstransformator insbesondere in mehrere Einzelwicklungen oder sogar Einzeltransformatoren, die geringere Abmessungen haben und deshalb höhere Frequenzen erlauben.

Ferner steigt bei gleicher Anzahl von produzierten Systemen die Anzahl der identischen Bauteile und damit die Produktionskosten jeder Einheit aufgrund von Skaleneffekten.

Die Übertragung über den oder die Transformatoren erfolgt insbesondere mit erhöhter Frequenz, um eine erhöhte Leistungsdichte, kleine Baugröße und geringe Materialkosten zu erreichen.

Die Ausgänge der Module 5 auf der Sekundärseite sind insbesondere galvanisch getrennt und können bevorzugt aus diesem Grund beliebig fix in Serie und/oder parallel verschaltet oder umkonfigurierbar gestaltet werden, um einen oder mehrere Ladepunkte 22 zu speisen. Die galvanische Trennung 28 bietet den Vorteil, dass mit niederer Spannung und niederem Strom und höherer Frequenz und beispielsweise mit einer Frequenz von mindestens 400 Hz und bevorzugt darüber gearbeitet werden kann.

Die hier vorgestellte Ladevorrichtung 1 hat den Vorteil, dass nicht nur ein Fahrzeug, sondern gleichzeitig viele Ladepunkte 22 mit unterschiedlichen Spannungsklassen bedient werden können.

## Patentansprüche

1. Ladevorrichtung (1) zum Aufladen elektrischer Energiespeicher für Kraftfahrzeuge, umfassend wenigstens eine Umwandlungseinrichtung (2) zur Umsetzung einer aus einem Mittelspannungsnetz (3) bezogenen Leistung in eine für den Ladevorgang des Energiespeichers geeignete Leistung,
**dadurch gekennzeichnet,**
**dass** die Umwandlungseinrichtung (2) wenigstens eine mit wenigstens einer Phase (13) des Mittelspannungsnetzes (3) verbundene Phaseneinheit (4) mit wenigstens zwei Strängen (14, 24), nämlich wenigstens einen Strang (14) für einen positiven Anteil der Phase (13) und wenigstens einen Strang (24) für einen negativen Anteil der Phase (13), umfasst
und **dass** den Strängen (14, 24) jeweils wenigstens ein Modul (5) mit wenigstens einer Eingangseinheit (6) und wenigstens einer Invertereinheit (7) und wenigstens einer Transformatoreinheit (8) und wenigstens einer der Transformatoreinheit (8) zugeordneten Gleichrichtereinheit (18) und wenigstens einer Ausgangseinheit (9) zugeordnet ist
und **dass** die Ladevorrichtung (1) eine Mehrzahl von Ladepunkten (22) umfasst, an denen jeweils wenigstens ein Energiespeicher für Kraftfahrzeuge koppelbar ist und dass die Ladepunkte (22) jeweils durch mehrere Module (5) und/oder mehrere Phaseneinheiten (4) mit der für einen Ladevorgang des Energiespeichers benötigten Leistung versorgbar sind.

2. Ladevorrichtung (1) nach dem vorhergehenden Anspruch, wobei den Strängen (14, 24) jeweils wenigstens zwei Module (5) zugeordnet sind.

3. Ladevorrichtung (1) nach dem vorhergehenden Anspruch, wobei die Module (5) der Phaseneinheit (4) über ihre Eingangseinheiten (6) seriell verschaltet sind.

4. Ladevorrichtung (1) nach einem der vorhergehenden Ansprüche, wobei die Phaseneinheit (4) wenigstens eine galvanische Trennung (28) zwischen dem Mittelspannungsnetz (3) und einem zu ladenden Energiespeicher umfasst und wobei die galvanische Trennung (28) durch die Transformatoreinheit (8) zur Verfügung gestellt wird.

5. Ladevorrichtung (1) nach einem der vorhergehenden Ansprüche, wobei die Umwandlungseinrichtung (2) wenigstens zwei und vorzugsweise wenigstens drei Phaseneinheiten (4) umfasst, sodass für die vom Mittelspannungsnetz (3) bereitgestellten Phasen (13) jeweils wenigstens eine Phaseneinheit (4) vorgesehen ist.

6. Ladevorrichtung (1) nach dem vorhergehenden Anspruch, wobei die Phaseneinheiten (4) über ihre Stränge (14, 24) miteinander verschaltet und vorzugsweise parallel verschaltet sind.

7. Ladevorrichtung (1) nach einem der vorhergehenden Ansprüche, wobei die Eingangseinheit (6) wenigstens eine passive Gleichrichtereinrichtung (16) umfasst.

8. Ladevorrichtung (1) nach einem der vorhergehenden Ansprüche, wobei die Eingangseinheit (6) wenigstens eine aktive Gleichrichtereinrichtung (16) umfasst, welche vorzugsweise wenigstens eine Phasenanschnittsteuerung (26) und/oder wenigstens einen Bipolartransistor mit isolierter Gate-Elektrode (IGBT) (36) und/oder wenigstens einen Feldeffekttransistor aufweist.

9. Ladevorrichtung (1) nach einem der vorhergehenden Ansprüche, wobei die Module (5) wenigstens teilweise über wenigstens eine Steuereinrichtung (12) miteinander wirkverbunden sind, sodass die Eingangseinheiten (6) und/oder die Invertereinheiten (7) durch die Steuereinrichtung (12) ansteuerbar sind.

10. Ladevorrichtung (1) nach einem der vorhergehenden Ansprüche, wobei die Invertereinheit (7) wenigstens eine Dual-Active-Bridge-Einrichtung (17) mit oder ohne Softswitching (27) und/oder wenigstens einen Neutral-Point-Clamped-(NPC-) Fünflevelinverter (37) mit oder ohne Softswitching (27) umfasst.

11. Ladevorrichtung (1) nach einem der vorhergehenden Ansprüche, wobei die Module (5) wenigstens teilweise über ihre Ausgangseinheiten (9) parallel und/oder seriell verschaltet sind.

12. Ladevorrichtung (1) nach dem vorhergehenden Anspruch, wobei die Ausgangseinheiten (9) steuerbar verschaltet sind, sodass in Abhängigkeit einer Kenngröße zwischen einer parallelen und einer seriellen und einer gemischten Verschaltung gewechselt werden kann.

## Claims

1. Charging apparatus (1) for charging electrical energy stores for motor vehicles, comprising at least one conversion device (2) for converting a power supplied from a medium-voltage grid (3) to a power suitable for the charging process of the energy store,
**characterized**
**in that** the conversion device (2) comprises at least one phase unit (4) connected to at least one phase (13) of the medium-voltage grid (3), said phase unit having at least two strands (14, 24), namely at least one strand (14) for a positive component of the phase (13) and at least one strand (24) for a negative component of the phase (13),
and **in that** at least one module (5), having at least one input unit (6) and at least one inverter unit (7) and at least one transformer unit (8) and at least one rectifier unit (18) associated with the transformer unit (8) and at least one output unit (9), is associated in each case with the strands (14, 24)
and **in that** the charging apparatus (1) comprises a plurality of charging points (22), to which in each case at least one energy store for motor vehicles can be coupled and in that the charging points (22) can be supplied with the power required for a charging process of the energy store in each case by a plurality of modules (5) and/or a plurality of phase units (4).

2. Charging apparatus (1) according to the preceding claim, wherein at least two modules (5) are associated in each case with the strands (14, 24).

3. Charging apparatus (1) according to the preceding claim, wherein the modules (5) of the phase unit (4) are interconnected in series by means of their input units (6) .

4. Charging apparatus (1) according to one of the preceding claims, wherein the phase unit (4) comprises at least one DC isolation (28) between the medium-voltage grid (3) and an energy store that is to be charged, and wherein the DC isolation (28) is provided by the transformer unit (8).

5. Charging apparatus (1) according to one of the preceding claims, wherein the conversion device (2) comprises at least two and preferably at least three phase units (4) such that at least one phase unit (4) is provided in each case for the phases (13) provided by the medium-voltage grid (3).

6. Charging apparatus (1) according to the preceding claim, wherein the phase units (4) are interconnected with one another by means of their strands (14, 24) and preferably interconnected in parallel.

7. Charging apparatus (1) according to one of the preceding claims, wherein the input unit (6) comprises at least one passive rectifier device (16).

8. Charging apparatus (1) according to one of the preceding claims, wherein the input unit (6) comprises at least one active rectifier device (16), which preferably has at least one phase gating controller (26) and/or at least one insulated-gate bipolar transistor (IGBT) (36) and/or at least one field-effect transistor.

9. Charging apparatus (1) according to one of the preceding claims, wherein the modules (5) are at least partially operatively connected to one another by means of at least one control device (12) such that the input units (6) and/or the inverter units (7) can be driven by the control device (12).

10. Charging apparatus (1) according to one of the preceding claims, wherein the inverter unit (7) comprises at least one dual-active-bridge device (17) with or without soft switching means (27) and/or at least one five-level neutral-point-clamped (NPC) inverter (37) with or without soft switching means (27).

11. Charging apparatus (1) according to one of the preceding claims, wherein the modules (5) are at least partially interconnected in parallel and/or in series by means of their output units (9).

12. Charging apparatus (1) according to the preceding claim, wherein the output units (9) are interconnected in a controllable manner such that it is possible to change between a parallel and a series and a mixed interconnection arrangement depending on a characteristic variable.

## Revendications

1. Dispositif de charge (1) destiné à charger un accumulateur d'énergie électrique de véhicules automobiles, le dispositif comprenant au moins un moyen convertisseur (2) destiné à convertir une puissance tirée d'un réseau à moyenne tension (3) en une puissance adaptée au processus de charge de l'accumulateur d'énergie,
**caractérisé en ce que**
le moyen convertisseur (2) comprend au moins une unité de phase (4) reliée à au moins une phase (13) du réseau à moyenne tension (3) et pourvue d'au moins deux conducteurs (14, 24), à savoir au moins un conducteur (14) destiné à une partie positive de la phase (13) et au moins un conducteur (24) destiné à une partie négative de la phase (13),
et les conducteurs (14, 24) sont associés chacun à au moins un module (5) comprenant au moins une unité d'entrée (6) et au moins une unité formant onduleur (7) et au moins une unité formant transformateur (8) et au moins une unité formant redresseur (18) associée à l'unité formant transformateur (8) et au moins une unité de sortie (9),
et le dispositif .de charge (1) comprend une pluralité de points de charge (22) à chacun desquels peut être couplé au moins un accumulateur d'énergie de véhicules automobiles et les points de charge (22) peuvent chacun être alimentés par plusieurs modules (5) et/ou plusieurs, unités de phase (4) avec la puissance nécessaire à un processus de charge de l'accumulateur d'énergie.

2. Dispositif de charge (1) selon la revendication précédente, les conducteurs (14, 24) étant associés chacun à au moins deux modules (5).

3. Dispositif de charge (1) selon la revendication précédente, les modules (5) de l'unité de phase (4) étant montés en série par le biais de leurs unités d'entrée (6).

4. Dispositif de charge (1) selon l'une des revendications précédentes, l'unité de phase (4) comprenant au moins une séparation galvanique (28) entre le réseau à moyenne tension (3) et un accumulateur d'énergie à charger et la séparation galvanique (28) étant assurée par l'unité formant transformateur (8).

5. Dispositif de charge (1) selon l'une des revendications précédentes, le moyen convertisseur (2) comprenant au moins deux, et de préférence au moins trois, unités de phase (4) de sorte qu'au moins une unité de phase (4) soit prévue pour chacune des phases (13) fournies par le réseau à moyenne tension (3).

6. Dispositif de charge (1) selon la revendication précédente, les unités de phase (4) étant reliées les unes aux autres par leurs conducteurs (14, 24) et étant de préférence montées en parallèle.

7. Dispositif de charge (1) selon l'une des revendications précédentes, l'unité d'entrée (6) comprenant au moins un moyen redresseur passif (16).

8. Dispositif de charge (1) selon l'une des revendications précédentes, l'unité d'entrée (6) comprenant au moins un moyen redresseur actif (16) qui comporte de préférence au moins une commande de partie de phase (26) et/ou au moins un transistor bipolaire pourvu d'une électrode de grille isolée (IGBT) (36) et/ou au moins un transistor à effet de champ.

9. Dispositif de charge (1) selon l'une des revendications précédentes, les modules (5) étant au moins partiellement reliés fonctionnellement les uns aux autres par au moins un moyen de commande (12) de sorte que les unités d'entrée (6) et/ou les unités formant onduleur (7) puissent être commandées par le moyen de commande (12).

10. Dispositif de charge (1) selon l'une des revendications précédentes, l'unité formant onduleur (7) comprenant au moins un moyen formant double pont actif (17) avec ou sans commutation douce (27) et/ou au moins un onduleur à cinq niveaux à point neutre (NPC) (37) avec ou sans commutation douce (27).

11. Dispositif de charge (1) selon l'une des revendications précédentes, les modules (5) étant au moins partiellement montés en parallèle et/ou en série par le biais de leurs unités de sortie (9).

12. Dispositif de charge (1) selon la revendication précédente, les unités de sortie (9) étant reliées entre elles de manière commandable de façon à pouvoir passer entre un montage en parallèle et un montage en série et un montage mixte en fonction d'un paramètre.
